# EUROPÄISCHE PATENTSCHRIFT

(11) **EP 1 360 459 B1**
(45) Veröffentlichungstag und Bekanntmachung des Hinweises auf die Patenterteilung: **17.12.2008**
(21) Anmeldenummer: 02701197.2
(22) Anmeldetag: 17.01.2002
(51) Int. Cl.: G01C 21/36

(54) **VERFAHREN ZUM UBERGEBEN VON ZIELFüRUNGSELEMENT,FAHRZEUGNAVIGATIONSGERÄT UND ZENTRALE**
METHOD FOR TRANSFERRING DESTINATION GUIDANCE ELEMENTS, VEHICLE NAVIGATION DEVICE AND CONTROL CENTER
PROCEDE POUR TRANSFERER DES ELEMENTS DE GUIDAGE VERS UNE DESTINATION, APPAREIL DE NAVIGATION DE VEHICULE ET CENTRALE

(30) Priorität: 09.02.2001 DE 10105898
(43) Veröffentlichungstag der Anmeldung: 12.11.2003
(73) Patentinhaber: ROBERT BOSCH GMBH, 70442 Stuttgart (DE)
(72) Erfinder: KYNAST, Andreas, 31139 Hildesheim (DE); FRIEDRICHS, Arne, 38114 Braunschweig (DE); SKWAREK, Volker, 31162 Bad Salzdetfurth (DE)
(86) Internationale Anmeldenummer: PCT/DE2002/000133
(87) Internationale Veröffentlichungsnummer: WO 2002/065058

(56) Entgegenhaltungen:
- DE-A- 19 651 146

## Beschreibung

Die vorliegende Erfindung betrifft ein Verfahren zum Übergeben von zumindest einem Zielführungselement, insbesondere einem Straßen- und/oder Ortsnamen, von einem Fahrzeugnavigationsgerät zu einer Zentrale, mit den folgenden Schritten:
a) Eingeben von Zielführungselementdaten, die zumindest ein Zielführungselement betreffen, in das Fahrzeugnavigationsgerät,
b) Übermitteln von eingegebenen Zielführungselementdaten an eine Zentrale, über eine Online-Verbindung zwischen dem Fahrzeugnavigationsgerät und der Zentrale.

Weiterhin betrifft die vorliegende Erfindung ein Fahrzeugnavigationsgerät, insbesondere zur Teilnahme an dem erfindungsgemäßen Verfahren, das keine für eine Routenberechnung ausreichende Datenbasis aufweist, mit einer Eingabeeinrichtung, über die ein Benutzer zumindest ein Zielführungselement betreffende Zielführungselement daten eingeben kann, wobei das Fahrzeugnavigationsgerät Kommunikationseinrichtungen aufweist oder mit separaten Kommunikationseinrichtungen zusammenwirkt, um Daten mit einer Zentrale auszutauschen, in der Routen berechnet werden. Darüber hinaus betrifft die vorliegende Erfindung eine Zentrale, insbesondere zur Teilnahme an dem erfindungsgemäßen Verfahren, in der Zielführungselement-Datenbankeinträgt zur Verfügung stehen, wobei die Zentrale Kommunikationseinrichtungen aufweist oder mit separaten Kommunikationseinrichtungen zusammenwirkt, um Daten mit Fahrzeugnavigationsgeräten auszutauschen.

### Stand der Technik

Es ist bekannt, dass zur Routensuche eine Verbindung zwischen einem Start- und einem Zielort nach bestimmten Kriterien gesucht wird. Zu diesem Zweck ist die Eingabe von Zielführungselementen erforderlich, die beispielsweise den Start- und/oder den Zielort definieren. Eine derartige Eingabe kann beispielsweise über eine dem Fahrzeugnavigationsgerät zugeordnete Tastatur erfolgen. Wenn das Fahrzeugnavigationsgerät eine Zielführungselement-Datenbank mitführt, können die eingegebenen Zielführungselementdaten unmittelbar verifiziert werden, indern sie mit den Einträgen der Zielführungselement-Datenbank verglichen werden. Neuartige Fahrzeugnavigationsgeräte, die beispielsweise als hybride Fahrzeugnavigationsgeräte oder als Offboard-Fahrzeugnavigationsgeräte bezeichnet werden, sehen jedoch keine vollständigen Zielführungselement-Datenbanken innerhalb des Navigationsgerätes vor. Bei einigen Systemen wird auch der Vorgang der Routen suche aus dem Fahrzeugnavigationsgerät ausgelagert. Dem Benutzer stehen dabei während der Start- und/oder der Zieleingabe keine vollständigen Informationen über mögliche Zielführungselemente wie beispielsweise Straßen oder Orte zur Verfügung. Daher wird bei derartigen Fahrzeugnavigationsgeräten zum Zwecke der Start- und/oder Zielübermittlung eine Online-Verbindung zu einer zentralen Zielführungselement-Datenbank aufgebaut. Dabei tritt das Problem auf, dass beispielsweise eine Abweichung in der Schreibweise der vom Benutzer eingegebenen Zielführungselemente und den Zielführungselement-Datenbankeinträgen dazu führt, dass beispielsweise der Start- und/oder der Zielfunkt nicht verifiziert beziehungsweise übergeben werden kann, so dass keine Zielrunrung durchgeführt werden kann.

Die DE 19651146 beschreibt ein Gerät nach dem stand der Technik.

### Vorteile der Erfindung

Dadurch, dass das erfindungsgemäße Verfahren weiterhin die folgenden Schritte umfasst:
c) Vergleichen der übermittelten Zielführungselementdaten mit in der Zentrale verfügbaren Zielführungselement-Datenbankeinträgen und Unterscheiden zumindest der folgenden Fälle:
   - Fall 1:: den übermittelten Zielführungselementdaten kann bezüglich jedem enthaltenen Zielführungselement eindeutig ein Zielführungselement-Datenbankeintrag zugeordnet werden,
   - Fall 2:: den übermittelten Zielführungselementdaten kann zumindest bezüglich einem Zielführungselement eine Mehrzahl von Zielführungselement-Datenbankeinträgen nicht eindeutig zugeordnet werden,
   - Fall 3:: den übermittelten Zielführungselementdaten kann zumindest bezüglich einem Zielführungselement kein ZielführungselementDatenbankeintrag zugeordnet werden,
wobei die Zentrale im Fall 2 zumindest einige der Mehrzahl der nicht eindeutig zuordbaren Zielführungselement-Datenbankeinträge über eines Online-Verbindung an das Fahrzeugnavigationsgerät übermittelt,
wird ein mehrstufiges Kommunikationsverfahren bereitgestellt, mit dem beispielsweise Start- und/oder Zielpunkte auch dann verifiziert werden können, wenn der Benutzer, sofern eine Tastatureingabe vorgesehen ist, die genaue Schreibweise der Zielführungselemente nicht kennt oder diese in einer abgekürzten Form eingibt. Bei einer gemäß dem Grundgedanken der Erfindung ebenfalls möglichen Spracheingabe können entsprechende Probleme auftreten.

Bei dem erfindungsgemäßen Verfahren ist vorzugsweise vorgesehen, dass die im Fall 2 (das heißt, wenn den übermittelten Zielführungselementdaten zumindest bezüglich einem Zielführungselement eine Mehrzahl von Zielführungselement-Datenbankeinträgen nicht eindeutig zugeordnet werden kann) an das Fahrzeugnavigationsgerät übermittelte Mehrzahl der nicht eindeutig zuordbaren Zielführungselement-Datenbankeinträge einem Benutzer durch das Fahrzeugnavigationsgerät zur Auswahl angeboten wird, und dass ein von dem Benutzer ausgewählter Zielführungselement-Datenbankeintrag von dem Fahrzeugnavigationsgerät über eine Online-Verbindung an die Zentrale übermittelt wird. Die Mehrzahl der nicht eindeutig zuordbaren Zielführungselement-Datenbankeinträge kann zu diesem Zweck beispielsweise auf einem Display des Fahrzeugnavigationsgerätes angezeigt werden, wobei dem Benutzer vorzugsweise die Möglichkeit eingeräumt wird, den zutreffenden Zielführungselement-Datenbankeintrag oder die zutreffenden Zielführungselement-Datenbankeinträge auszuwählen. Generell ist das. Verfahren jedoch nicht darauf beschränkt, dass die Eingaben in das Fahrzeugnavigationsgerät über eine Tastatur erfolgen, sondern es kann beispielsweise auch eine Touch-Screen-Eingabe oder eine Spracheingabe vorgesehen sein.

Das erfindungsgemäße Verfahren sieht vorzugsweise weiterhin vor, dass dem Benutzer im Fall 2 (das heißt, wenn den übermittelten Zielführungselementdaten zumindest bezüglich einem Zielführungselement eine Mehrzahl von Zielführungselement-Datenbankeinträgen nicht eindeutig zugeordnet werden kann) ein weiterer Auswahlpunkt angeboten wird, der vom Benutzer ausgewählt werden kann, wenn keiner der Mehrzahl der übermittelten nicht eindeutig zuordbaren Zielführungselement-Datenbankeinträge zutrifft. Je nachdem, ob die vom Benutzer eingegebenen und an die Zentrale übertragenen Zielführungselementdaten ein oder mehrere Zielführungselemente betreffen, können auch mehrere derartiger weiterer Auswahlpunkte vorgesehen sein, vorzugsweise derart, dass für jedes Zielführungselement ein weiterer Auswahlpunkt vorgesehen wird.

In diesem Zusammenhang sieht das erfindungsgemäße Verfahren vorzugweise weiterhin vor, dass die vom Benutzer vorgenommene Auswahl des weiteren Auswahlpunktes (oder der weiteren Auswahlpunkte) der Zentrale über eine Online-Verbindung mitgeteilt wird, und dass die Zentrale anschließend entsprechend dem Fall 3 verfährt (das heißt dem Fall, in dem den übermittelten Zielführungselementdaten zumindest bezüglich einem Zielführungselement kein Zielführungselement-Datenbankeintrag zugeordnet werden kann).

Vorzugsweise ist bei dem erfindungsgemäßen Verfahren vorgesehen, dass im Fall 1 (das heißt, wenn den übermittelten Zielführuhgselementdaten bezüglich jedem enthaltenen Zielführungselement eindeutig ein Zielführungselement-Datenbankeintrag zugeordnet werden kann) jeder eindeutig zuordbare Zielführungselement-Datenbankeintrag von der Zentrale zur weiteren Verarbeitung übernommen wird. Diese weitere Verarbeitung kann dabei insbesondere die Routenberechnung und Übermittlung an das Fahrzeug umfassen. Es können jedoch ebenfalls Ausführungsformen vorgesehen sein, bei denen die weitere Verarbeitung die Übermittlung der verifizierten Zielführungselemente an eine andere Zentrale oder zurück zum Fahrzeugnavigationsgerät umfasst, sofern die Routenberechnung dort durchgeführt wird.

Das erfindungsgemäße Verfahren sieht vorzugsweise weiterhin vor, dass die Zentrale im Fall 3 (das heißt, wenn den übermittelten Zielführungselementdaten zumindest bezüglich einem Zielführungselement kein Zielführungselement-Datenbankeintrag zugeordnet werden kann) über eine Online-Verbindung eine Nachricht an das Fahrzeugnavigationsgerät übermittelt wird, die dem Benutzer signalisiert, dass zumindest einem Zielführungselement kein Zielführungselement-Datenbankeintrag zugeordnet werden kann. In diesem Fall erhält der Benutzer vorzugsweise die Möglichkeit, erneut Zielführungselementdaten einzugeben, die speziell das problematische Zielführungselement betreffen. Dabei kann der Benutzer beispielsweise eine andere Schreibweise wählen oder, falls die erste Eingabe in Form einher Abkürzung erfolgte, die vollständige Bezeichnung beispielsweise des Ortes oder der Straße eingeben.

In diesem Zusammenhang ist bei dem erfindungsgemäßen Verfahren vorzugsweise weiterhin vorgesehen, dass dem Benutzer im Fall 3 (das heißt, wenn den übermittelten Zielführungselementdaten zumindest bezüglich einem Zielführungselement kein Zielführungselement-Datenbankeintrag zugeordnet werden kann) angeboten wird, dass eine Online-Verbindung zu einem Operator hergestellt wird. Diese Online-Verbindung kann insbesondere eine Telefonverbindung sein, die es ermöglicht, dass der Benutzer gemeinsam mit dem Operator versucht, das fragliche Zielführungselement zu verifizieren. Ein auf diese Weise verifizierten Zielführungselement kann dann durch den Operator in geeigneter Weise in die Zentrale eingegeben werden, damit es zur weiteren Verarbeitung zur Verfügung steht.

Wie erwähnt, ist bei dem erfindungsgemäßen Verfahren vorzugsweise vorgesehen, dass zumindest ein Zielführungselement einen Ortsnamen umfasst, insbesondere den Namen des Startortes und/oder den Namen des Zielortes.

Weiterhin ist bei dem erfindungsgemäßen Verfahren vorzugsweise vorgesehen, dass zumindest ein Zielführungselement einen Straßennamen umfasst, insbesondere den Namen der Startstraße und/oder den Namen der Zielstraße.

Das erfindungsgemäße Verfahren kann derart durchgeführt werden, dass die eingegebenen Zielführungsdaten mehrere Zielführungselemente eines Routenstartpunktes und/oder eines Routenzielpunktes betreffen. Beispielsweise ist es möglich, dass der Benutzer den Namen des Startortes, den Namen der Statstraßen, den Abschnitt der Startstraße, den Namen des Zielortes, den Namen der Zielstraße, den Abschnitt der Zielstraße und so weiter gemeinsam als Zielführungselementdaten in das Fahrzeugnavigationsgerät in der vermuteten oder abgekürzten Schreibweise eingibt, so dass alle Informationen auf einmal an die Zentrale übertragen werden können. Bei dieser Vorgehensweise wird die Anzahl der Kommunikationsschritte zwischen Fahrzeugnavigationsgerät und Zentrale verringert, die erforderlich ist, um alle erforderlichen Zielführungselemente zu verifizieren.

Zusätzlich oder alternativ kann bei dem erfindungsgemäßen Verfahren vorgesehen sein, dass es mehrmals hintereinander für unterschiedliche Zielführungselemente durchgeführt wird. Beispielsweise kann zunächst nur der Name des Startortes übergeben beziehungsweise verifiziert werden, und alle weiteren zur Routenplanung erforderlichen Zielführungselemente können nacheinander abgearbeitet werden. Bei dieser Ausführungsform des erfindungsgemäßen Verfahrens sind zwar mehr Kommunikationsschritte erforderlich, es wird jedoch der Vorteil erzielt, dass nur dann weitere Zielführungselementdaten eingegeben werden müssen, wenn alle vorher bearbeiteten Zielführungselemente erfolgreich verifiziert beziehungsweise übergeben wurden.

Wie erwähnt, ist bei dem erfindungemäßen Verfahren vorzugsweise vorgesehen, dass es zur Übergabe von einem oder mehreren der folgenden Zielführungselemente verwendet wird: Startort, Startstraße, Abschnitt der Startstraße, Zielort, Zielstraße, Abschnitt der Zielstraße. Dabei kann ein Straßenabschnitt beispielsweise.durch eine Straßenkreuzung, eine Kilometerangabe oder eine Hausnummer und so weiter verifiziert werden.

Bei dem erfindungsgemäßen Verfahren ist vorzugsweise vorgesehen, dass der Datenaustausch zwischen dem Fahrzeugnavigationsgerät und der Zentrale über ein Mobilfunknetz erfolgt. Ein derartiges Mobilfunknetz kann beispielsweise nach dem GSM-Standard oder dem UMTS-Standard arbeiten. In diesem Zusammenhang kann vorgesehen sein, dass ohnehin im Fahrzeug vorhandene Mobilfunkendgeräte für den Datenaustausch verwendet werden. Es kann jedoch ebenfalls vorgesehen sein, dass dem Fahrzeugnavigationsgerät spezielle Kommunikationseinrichtungen zugeordnet sind, die beispielsweise nach einem speziellen Standard arbeiten, der für den Datenaustausch zwischen Fahrzeugnavigationsgeräten und einer oder mehreren Zentralen verwendet wird.

Jedes Fahrzeugnavigationsgerät, das zur Teilnahme an dem erfindungsgemäßen Verfahren ausgelegt ist, fällt in den Schutzbereich der zugehörigen Ansprüche.

Gleiches gilt für jede Zentrale, die beispielsweise durch einen Kommunikationsserver gebildet sein kann, die zur Teilnahme an dem erfindungsgemäßen Verfahren ausgelegt ist.

Dadurch, dass bei dem erfindungsgemäßen Fahrzeugnavigationsgerät vorgesehen ist, dass es Auswahlmittel aufweist, mit denen der Benutzer zumindest einen Zielführungselement-Datenbankeintrag einer Mehrzahl von Zielführungselement-Datenbankeinträgen auswählen kann, die von der Zentrale als Antwort auf an die Zentrale übermittelte Zielführungselementdaten übermittelt wird, wenn die Zentrale zumindest einem Zielführungselement eine Mehrzahl von Zielführungselement-Datenbankeinträgen nicht eindeutig zuordnen kann, können Zielführungselemente auch dann verifiziert werden, wenn der Benutzer die genaue Schreibweise des Zielführungselementes nicht kennt oder das Zielführungselement abgekürzt eingegeben hat. Im Falle einer Spracheingabe können insbesondere die für eine Routenplanung erforderlichen Zielführungselemente auch dann verifiziert werden, wenn der Benutzer die Bezeichnung des Zielführungselementes abgekürzt, falsch oder undeutlich ausspricht. Die Auswahlmittel können dabei beispielsweise durch eine Tastatur oder einen Touch-Screen-Bildschirm gebildet sein, wobei die Mehrzahl der Zielführungselement-Datenbankeinträge im letzten Fall vorzugsweise auf dem Touch-Screen-Bildschirm dargestellt wird. Gegebenenfalls kann auch die Auswahl des zutreffenden Zielführungselement-Datenbankeintrags durch eine Spracheingabe erfolgen, wobei es beispielsweise vorgesehen sein kann, dass jedem Zielführungselement-Datenbankeintrag der Mehrzahl von Zielführungselement-Datenbankeinträgen eine Nummer zugeordnet wird, die der Benutzer zur Auswahl ausspricht.

Bei dem erfindungsgemäßen Fahrzeugnavigationsgerät ist vorzugsweise weiterhin vorgesehen, dass es den zumindest einen vom Benutzer ausgewählten Zielführungselement-Datenbankeintrag mit den Kommunikationseinrichtungen an die Zentrale übermittelt. Beispielsweise wenn das erfindungsgemäße Fahrzeugnavigationsgerät zur Durchführung des erfindungsgemäßen Verfahrens eingesetzt wird, kann die Zentrale in diesem Fall eine geeignete Weiterverarbeitung des ausgewählten Zielführungselement-Datenbankeintrags vorsehen.

Auch bei dem erfindungsgemäßen Fahrzeugnavigationsgerät ist vorzugsweise vorgesehen, dass zumindest ein Zielführungselement einen Ortsnamen umfasst, beispielsweise den Namen des Startortes und/oder den Namen des Zielortes.

Entsprechend ist bei dem erfindungsgemäßen Fahrzeugnavigationsgerät vorzugsweise vorgesehen, dass zumindest ein Zielführungselement einen Straßennamen umfasst, beispielsweise den Namen der Startstraße und/oder den Namen der Zielstraße.

Bei dem erfindungsgemäßen Fahrzeugnavigationsgerät kann vorgesehen sein, dass die eingegebenen Zielführungselementdaten mehrere Zielführungselemente eines Routenstartpunktes und/oder eines Routenzielpunktes betreffen. Wenn mehrere Zielführungselemente auf einmal eingegeben werden, kann beispielsweise die Anzahl verringert werden, mit der das erfindungsgemäße Verfahren durchgeführt werden muss, bis alle erforderlichen Zielführungselemente verifiziert sind.

Auch bei dem erfindungsgemäßen Fahrzeugnavigationsgerät ist vorzugsweise vorgesehen, dass die Kommunikationseinrichtungen durch ein Mobilfunkendgerät gebildet sind. Dieses Mobilfunkendgerät kann beispielsweise nach dem GSM- oder dem UMTS-Standard arbeiten. Insbesondere wenn die Kommunikationseinrichtungen durch separate Kommunikationseinrichtungen gebildet sind, kann vorgesehen sein, dass ohnehin im Fahrzeug vorhandene Mobilfunkendgeräte für den Datenaustausch eingesetzt werden. Es kann jedoch ebenfalls vorgesehen sein, dass ein spezielles Mobilfunkendgerät dem Fahrzeugnavigationsgerät zugeordnet oder in dieses integriert wird.

Dadurch, dass bei der erfindungsgemäßen Zentrale vorgesehen ist, dass sie dazu ausgelegt ist, über die Kommunikationseinrichtungen von einem Fahrzeugnavigationsgerät übermittelte Zielführungselementdaten zu empfangen, dass sie Mittel aufweist, um empfangenen Zielführungselementdaten mit Zielführungselement-Datenbankeinträgen zu vergleichen und dabei zumindest die folgende Fälle zu unterscheiden:
- Fall 1:: den übermittelten Zielführungselementdaten kann bezüglich jedem enthaltenen Zielführungselement eindeutig ein Zielführungselement-Datenbankeintrag zugeordnet werden,
- Fall 2:: den übermittelten Zielführungselementdaten kann zumindest bezüglich einem Zielführungselement eine Mehrzahl von Zielführungselement-Datenbankeinträgen nicht eindeutig zugeordnet werden,
- Fall 3:: den übermittelten Zielführungselementdaten kann zumindest bezüglich einem Zielführungselement kein Zielführungselement-Datenbankeintrag zugeordnet werden,
und dass sie im Fall 2 zumindest einige der Mehrzahl der nicht eindeutig zuordbaren Zielführungselement-Datenbankeinträge über die Kommunikationseinrichtungen an das Fahrzeugnavigationsgerät übermitteln, können insbesondere Fahrzeugnavigationsgeräte, die keine oder keine vollständige Zielführungselement-Datenbank aufweisen, bei der Verifizierung von Zielführungselementen unterstützt werden. Dadurch wird es dem Benutzer eines entsprechenden Fahrzeugnavigationsgerätes ermöglicht, Zielführungselemente in der vermuteten und/oder einer abgekürzten Form einzugeben. Die Zentrale ist dabei durch geeignete Hard-und Software gebildet, wobei der Fachmann entsprechende Software, die beispielsweise zur Durchführung des erfindungsgemäßen Verfahrens geeignet sein kann, mit ihm bekannten Mitteln erstellen kann. Die Zentrale kann beispielsweise durch einen Kommunikationsserver gebildet oder mitgebildet sein.

Die Zentrale ist vorzugsweise dazu ausgelegt, von einem Benutzer aus der Mehrzahl der Zielführungselement-Datenbankeinträge ausgewählte Zielführungselement-Datenbankeinträge über die Kommunikationseinrichtung zu empfangen und diese vom Benutzer ausgewählten Zielführungselement-Datenbankeinträge weiterzuverarbeiten. Diese Weiterverarbeitung kann insbesondere die Berechnung einer Route beziehungsweise die Zielführung umfassen. Es kann jedoch ebenfalls vorgesehen sein, dass die verifizierten Zielführungselemente an eine andere Zentrale oder an ein Fahrzeugnavigationsgerät übermittelt werden, sofern dort eine entsprechende Weiterverarbeitung vorgesehen ist.

Die Zentrale ist vorzugsweise weiterhin dazu ausgelegt, im Fall 1 (das heißt, wenn den übermittelten Zielführungselementen bezüglich jedem enthaltenen Zielführungselement eindeutig ein Zielführungselement-Datenbankeintrag zugeordnet werden kann) die eindeutig zuordbaren Zielführungselement-Datenbankeinträge weiterzuverarbeiten, wobei auf die vorstehenden Ausführungen verwiesen wird.

Weiterhin ist die erfindungsgemäße Zentrale vorzugsweise dazu ausgelegt, im Fall 3 (das heißt, wenn den übermittelten Zielführungselementdaten zumindest bezüglich einem Zielführungselement kein Zielführungselement-Datenbankeintrag zugeordnet werden kann) über die Kommunikationseinrichtungen eine Nachricht an das Fahrzeugnavigationsgerät zu übermitteln, die dem Benutzer signalisiert, dass zumindest einem Zielführungselement kein Zielführungselement-Datenbankeintrag zugeordnet werden kann. Auf der Seite des Fahrzeugnavigationsgerätes kann dem Benutzer dann die Möglichkeit eingeräumt werden, erneut Zielführungselementdaten einzugeben. Beispielsweise kann ein Benutzer in einem derartigen Fall versuchen, ein zunächst in abgekürzter Form eingegebenes Zielführungselement beim zweiten Versuch in ausgeschriebener Form einzugeben.

Die erfindungsgemäße Zentrale ist vorzugsweise weiterhin dazu ausgelegt, im Fall 3 (das heißt, wenn den übermittelten Zielführungselementdaten zumindest bezüglich einem Zielführungselement kein Zielführungselement-Datenbankeintrag zugeordnet werden kann) über die Kommunikationseinrichtung eine Nachricht an das Fahrzeugnavigationsgerät zu übermitteln, die dem Benutzer anbietet, dass eine Online-Verbindung mit einem operator hergestellt wird. Auch in diesem Fall kann die Online-Verbindung insbesondere eine Telefonverbindung sein, die es dem Benutzer ermöglicht, gemeinsam mit dem Operator das problematische Zielführungselement zu verifizieren. Ein auf diese Weise verifiziertes Zielführungselement kann dann von dem Operator in geeigneter Form zur Weiterverarbeitung in die Zentrale eingegeben werden.

Auch im Zusammenhang mit der erfindungsgemäßen Zentrale ist vorzugsweise vorgesehen, dass zumindest ein Zielführungselement einen Ortsnamen umfasst, beispielsweise den Namen eines Startortes und/oder den Namen eines Zielortes.

Weiterhin ist bei der erfindungsgemäßen Zentrale vorzugsweise vorgesehen, dass zumindest ein Zielführungselement einen Straßennamen umfasst, beispielsweise den Namen der Startstraße und/oder den Namen der Zielstraße.

Die erfindungsgemäße Zentrale kann derart ausgelegt sein, dass die eingegebenen Zielführungsdaten mehrere Zielführungselemente eines Routenstartpunktes und/oder eines Routenzielpunktes betreffen können. Wenn die an die Zentrale übermittelten Zielführungselementdaten mehrere oder alle zur Routenberechnung beziehungsweise zur Zielführung erforderlichen Zielführungselemente betreffen, ist in vielen Fällen eine geringere Anzahl von Kommunikationsschritten erforderlich, um alle erforderlichen Zielführungselemente zu verifizieren.

Auch im Zusammenhang mit der erfindungsgemäßen Zentrale ist vorzugsweise vorgesehen, dass die Kommunikationseinrichtungen dazu ausgelegt sind, mit Mobilfunkendgeräten zu kommunizieren. Auch in diesem Fall kann vorgesehen sein, dass das oder die Mobilfunkendgeräte nach dem GSM-oder dem UMTS-Standard arbeiten, wobei selbstverständlich auch andere geeignete Standards eingesetzt werden können, beispielsweise speziell für die Kommunikation zwischen Fahrzeugnavigationsgeräten und Zentralen vorgesehen Standards.

### Zeichnungen

Die Erfindung wird nachfolgend anhand der zugehörigen Zeichnungen noch näher erläutert.

Es zeigen:
- Figur 1: ein Flussdiagramm, das eine erste Ausführungsform des erfindungsgemäßen Verfahrens veranschaulicht, bei der die Zielführungselementdaten nur ein Zielführungselement betreffen,
- Figur 2: ein Flussdiagramm, das eine zweite Ausführungsform des erfindungsgemäßen Verfahrens veranschaulicht, bei der die Zielführungselementdaten mehrere Zielführungselemente betreffen, und
- Figur 3: ein Flussdiagramm, das eine dritte Ausführungsform des erfindungsgemäßen Verfahrens veranschaulicht, bei der vorgesehen ist, dass dem Benutzer die Unterstützung durch einen Operator angeboten wird, wenn zumindest ein Zielführungselement nicht verifiziert werden kann.

### Beschreibung der Ausführungsbeispiele

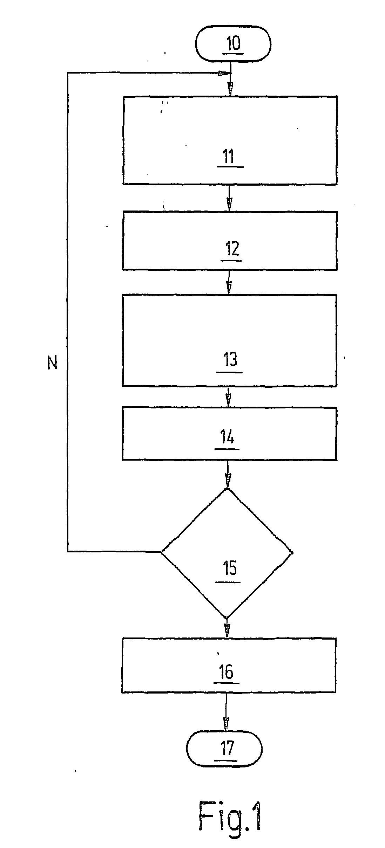

Figur 1 zeigt ein Flussdiagramm, das eine erste Ausführungsform des erfindungsgemäßen Verfahrens veranschaulicht, bei der die Zielführungselementdaten nur ein Zielführungselement betreffen, wobei die Funktion der in Figur 1 dargestellten Blöcke sich aus der folgenden Tabelle 1 ergibt.

**Tabelle 1**

| **Block** | **Funktion** |
|---|---|
| 10 | Start |
| 11 | Eingeben von Zielführungselementdaten, die ein Zielführungselement betreffen, in der vermuteten und/oder gegebenenfalls auch abgekürzten Schreibweise, in das Fahrzeugnavigationsgerät |
| 12 | Übermitteln der eingegebenen Zielführungselementdaten an eine Zentrale, über eine Online-Verbindung zwischen dem Fahrzeugnavigationsgerät und der Zentrale |
| 13 | Vergleichen der übermittelten Zielführungselementdaten mit in der Zentrale verfügbaren Zielführungselement-Datenbankeinträgen (bei diesem Beispiel mit dem Ergebnis, dass den übermittelten Zielführungselementdaten für das Zielführungselement eine Mehrzahl von Zielführungselement-Datenbankeinträgen nicht eindeutig zugeordnet werden kann) und Übermittlung der wahrscheinlichsten nicht eindeutig zuordbaren Zielführungselement-Datenbankeinträge an das Fahrzeugnavigationsgerät, über eine Online-Verbindung |
| 14 | Auswahl des gewünschten Zielführungselement-Datenbankeintrags aus der Mehrzahl der an das Fahrzeugnavigationsgerät übermittelten nicht eindeutig zuordbaren Zielführungselement-Datenbankeinträge durch den Benutzer und Übermittlung des von dem Benutzer ausgewählten Zielführungselement-Datenbankeintrags von dem Fahrzeugnavigationsgerät an die Zentrale, über eine Online-Verbindung |
| 15 | Alle Zielführungselemente übermittelt? |
| 16 | Routenberechnung und Zielführung |
| 17 | Ende |

Die erste Ausführungsform des erfindungsgemäßen Verfahrens beginnt beim Block 10. Im Block 11 gibt der Benutzer Zielführungselementdaten, die ein Zielführungselement betreffen, in das Fahrzeugnavigationsgerät ein. Bei der dargestellten Ausführungsform erfolgt die Eingabe über eine Tastatur, wobei das entsprechende Zielführungselement, beispielsweise der Startort, in der vermuteten und/oder gegebenenfalls auch abgekürzten Schreibweise eingegeben werden. Im Block 12 werden die im Block 11 eingegebenen Zielführungselementdaten an eine Zentrale übermittelt und zwar über eine Online-Verbindung zwischen dem Fahrzeugnavigationsgerät und der Zentrale. Diese Online-Verbindung kann beispielsweise durch eine Mobilfunkverbindung gebildet sein.

Im Block 13 vergleicht die Zentrale die übermittelten Zielführungselementdaten mit in der Zentrale verfügbaren Zielführungselement-Datenbankeinträgen. Für das dargestellte Beispiel ist angenommen, dass dieser Vergleich zu dem Ergebnis führt, dass den übermittelten Zielführungselementdaten für das Zielführungselement eine Mehrzahl von Zielführungselement-Datenbankeinträgen nicht eindeutig zugeordnet werden kann, was dem Fall 2 entspricht. Daher übermittelt die Zentrale eine Mehrzahl von nicht eindeutig zuordbaren Zielführungselement-Datenbankeinträgen über eine Online-Verbindung an das Fahrzeugnavigationsgerät, wobei es sich bei den übermittelten Zielführungselement-Datenbankeinträgen um die wahrscheinlichsten Zielführungselement-Datenbankeinträge handelt. Im Block 14 erfolgt die Auswahl des gewünschten Zielführungselement-Datenbankeintrags aus der Mehrzahl der an das Fahrzeugnavigationsgerät übermittelten nicht eindeutig zuordbaren Zielführungselement-Datenbankeinträge durch den Benutzer. Zu diesem Zweck werden die von der Zentrale übermittelten Zielführungselement-Datenbankeinträge beispielsweise auf einem Display des Fahrzeugnavigationsgerätes angezeigt, wobei dem Benutzer beispielsweise die Möglichkeit eingeräumt wird, einen angezeigten Eintrag durch eine entsprechende Berührung des Displays oder eine Tastatureingabe auszuwählen. Nachdem der Benutzer den gewünschten Zielführungselement-Datenbankeintrag ausgewählt hat, wird dieser ausgewählte Zielführungselement-Datenbankeintrag von dem Fahrzeugnavigationsgerät an die Zentrale übermittelt, und zwar durch eine Online-Verbindung. Im Block 15 wird überprüft, ob bereits alle für eine Routenberechnung erforderlichen Zielführungselemente übergeben beziehungsweise verifiziert wurden. Wenn dies nicht der Fall ist, wird zum Block 11 zurückgekehrt und der Benutzer erhält die Möglichkeit, erneut Zielführungselementdaten einzugeben. Wenn im Block 15 festgestellt wird, dass bereits alle erforderlichen Zielführungselemente verifiziert wurden, wird im Block 16 die Routenberechnung und die Zielführung durchgeführt. Im Block 17 ist das Verfahren gemäß der ersten Ausführungsform beendet.

In der Praxis könnte das erfindungsgemäße Verfahren gemäß der ersten Ausführungsform beispielsweise wie folgt ablaufen: der Benutzer eines Fahrzeugnavigationsgerätes vom Typ der Offboard-Navigation möchte von Hildesheim, Robert-Bosch-Straße, nach München, Flughafen, geführt werden. Der Benutzer gibt in sein Fahrzeugnavigationsgerät als erstes Zielführungselement den Startort als "HILDE" ein. Die entsprechenden Zielführungselementdaten werden an die Zentrale übertragen und dort mit Zielführungselement-Datenbankeinträgen verglichen. Als Ergebnis erhält der Benutzer folgende Einträge zurück: HILDEN, HILDERS und HILDESHEIM. Der Benutzer wählt den Zielführungselement-Datenbankeintrag HILDESHEIM aus und sendet zusätzlich als zweites Zielführungselement die Startstraße, "ROBERT-BOSCH". Daraufhin erhält der Benutzer von der Zentrale die Einträge ROBERT-BOSCH-WERK und ROBERT-BOSCH-STRASSE zurück. Der Benutzer wählt den zweiten Eintrag und übermittelt ihn an die Zentrale. Ähnlich verfährt der Benutzer für das Ziel. Nachdem alle für die Routenberechnung erforderlichen Zielführungselemente verifiziert wurden kann die Routenberechnung gestartet werden.

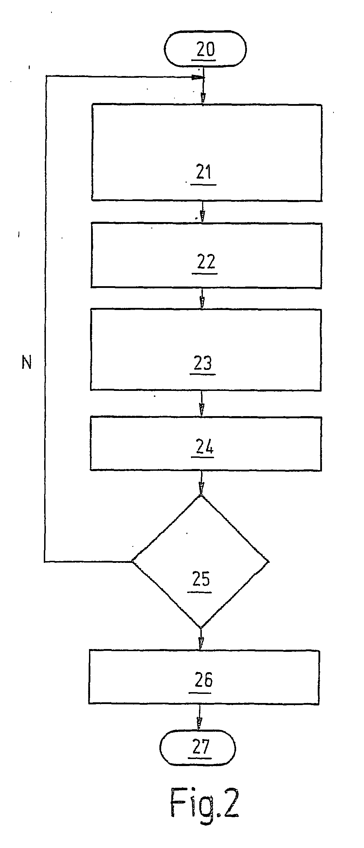

Figur 2 zeigt ein Flussdiagramm, das eine zweite Ausführungsform des erfindungsgemäßen Verfahrens veranschaulicht, bei der die Zielführungselementdaten mehrere Zielführungselemente betreffen, wobei die Funktion der in Figur 2 dargestellten Blöcke sich aus der folgenden Tabelle 2 ergibt.

**Tabelle 2**

| **Block** | **Funktion** |
|---|---|
| 20 | Start |
| 21 | Eingeben von Zielführungselementdaten, die mehrere Zielführungselemente betreffen, in der vermuteten und/oder gegebenenfalls auch abgekürzten Schreibweise, in das Fahrzeugnavigationsgerät |
| 22 | Übermitteln der eingegebenen Zielführungselementdaten an eine Zentrale, über eine Online-Verbindung zwischen dem Fahrzeugnavigationsgerät und der Zentrale |
| 23 | Vergleichen der übermittelten Zielführungselementdaten mit in der Zentrale verfügbaren Zielführungselement-Datenbankeinträgen (bei diesem Beipiel mit dem Ergebnis, dass den übermittelten Zielführungselementdaten zumindest für einige Zielführungselemente eine Mehrzahl von Zielführungselement-Datenbankeinträgen nicht eindeutig zugeordnet werden kann) und Übermittlung der wahrscheinlichsten nicht eindeutig zuordbaren Zielführungselement-Datenbankeinträge an das Fahrzeugnavigationsgerät über eine Online-Verbindung |
| 24 | Auswahl der gewünschten Zielführungselement-Datenbankeinträge aus der Mehrzahl der an das Fahrzeugnavigationsgerät übermittelten nicht eindeutig zuordbaren Zielführungselement-Datenbankeinträge durch den Benutzer und Übermittlung der von dem Benutzer ausgewählten Zielführungselement-Datenbankeintrage von dem Fahrzeugnavigationsgerät an die Zentrale, über eine Online-Verbindung |
| 25 | Alle Zielführungselemente übermittelt? |
| 26 | Routenberechnung und Zielführung |
| 27 | Ende |

Nach dem Beginn des Verfahrens im Block 20 gibt der Benutzer im Block 21 Zielführungselementdaten in das Navigationsgerät ein, wobei die Zielführungselementdaten mehrere Zielführungselemente betreffen, beispielsweise alle Zielführungselemente, die für eine Routenberechnung erforderlich sind (zum Beispiel Startort, Startstraße, Zielort und Zielstraße). Die Eingabe erfolgt auch in diesem Fall in der vermuteten und/oder einer abgekürzten Schreibweise. Im Block 22 werden die eingegebenen Zielführungselemente an eine Zentrale übermittelt. Im Block 23 vergleicht die Zentrale die übermittelten Zielführungselementdaten mit in der Zentrale verfügbaren Zielführungselement-Datenbankeinträgen, und zwar derart dass ein entsprechender Vergleich für jedes Zielführungselement durchgeführt wird. Im dargestellten Fall kann der Vergleich das Ergebnis haben, dass die Zentrale einigen Zielführungselementen eindeutig einen Zielführungselement-Datenbankeintrag zuordnen kann, während für andere Zielführungselemente jeweils eine Mehrzahl von Zielführungselement-Datenbankeinträgen ermittelt wird, die nicht eindeutig zugeordnet werden kann. Für jedes noch nicht verifizierte Zielführungselement wird dann eine Mehrzahl ermittelter Zielführungselement-Datenbankeinträge an das Fahrzeugnavigationsgerät übermittelt. Im Block 24 kann der Benutzer die zutreffenden Zielführungselemente entsprechend auswählen. Sofern im Block 25 festgestellt wird, dass noch nicht alle Zielführungselemente übermittelt beziehungsweise verifiziert wurden, wird zum Block 21 verzweigt, so dass der Benutzer die Möglichkeit erhält, bezüglich noch nicht verifizierter Zielführungselemente weitere Zielführungselementdaten einzugeben. Falls im Block 25 festgestellt wird, dass alle Zielführungselemente übermittelt beziehungsweise verifiziert sind, wird zum Block 26 fortgeschritten, in dem die Routenberechnung und die Zielführung erfolgt. Beim Block 27 ist das Verfahren gemäß der zweiten Ausführungsform der vorliegenden Erfindung beendet.

In der Praxis kann die zweite Ausführungsform des erfindungsgemäßen Verfahrens beispielsweise wie folgt ablaufen: der Benutzer eines Fahrzeugnavigationsgerätes vom Typ der Offboard-Navigations möchte wieder von Hildesheim, Robert-Bosch-Straße, nach München, Flughafen, geführt werden. Bei dieser Ausführungsform gibt der Benutzer für ein erstes Zielführungselement die Ortsbezeichnung "HILDE" ein. Weiterhin gibt der Benutzer bezüglich einem zweiten Zielführungselement als Straßenbezeichnung "ROBERT-BOSCH" ein. Nachdem die entsprechenden Zielführungselementdaten an die Zentrale übermittelt wurden erhält der Benutzer für das erste Zielführungselement die Zielführungselement-Datenbankeinträge HILFEN, HILDERS und HILDESHEIM zurück. Bezüglich dem zweiten Zielführungselement erhält der Benutzer praktisch gleichzeitig die Zielführungselement-Datenbankeinträge ROBERT-BOSCH-WERK und ROBERT-BOSCH-STRASSE zurück. Der Benutzer wählt dann den Zielführungselement-Datenbankeintrag HILDESHEIM und den Zielführungselement-Datenbankeintrag ROBERT-BOSCH-STRASSE aus. Daraufhin übermittelt das Fahrzeugnavigationsgerät die vom Benutzer ausgewählten Angaben an die Zentrale. In einem zweiten Schritt kann der Benutzer nun alle für das Ziel erforderlichen Zielführungselementdaten eingeben. Selbstverständlich ist es ebenfalls möglich, alle Eingaben für alle Zielführungselemente bezüglich des Startpunkts und des Zielpunkts auf einmal einzugeben und zu übertragen.

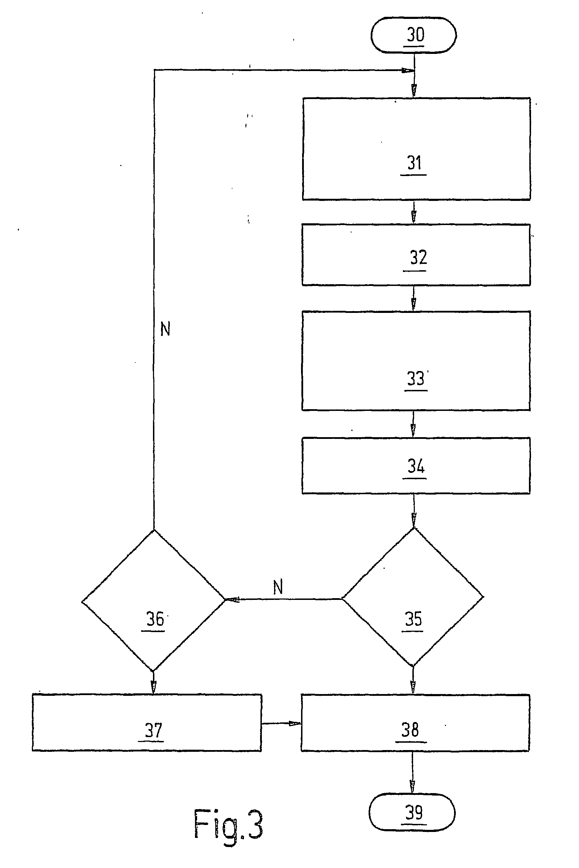

Figur 3 zeigt ein Flussdiagramm, das eine dritte Ausführungsform des erfindungsgemäßen Verfahrens veranschaulicht, bei der vorgesehen ist, dass dem Benutzer die Unterstützung durch einen Operator angeboten wird, wenn zumindest ein Zielführüngselement nicht verifiziert werden kann, wobei die Funktion der in Figur 3 dargestellten Blöcke sich aus der folgenden Tabelle 3 ergibt.

**Tabelle 3**

| **Block** | **Funktion** |
|---|---|
| 30 | Start |
| 31 | Eingeben von Zielführungselementdaten, die mehrere Zielführungselemente betreffen, in der vermuteten und/oder gegebenenfalls auch abgekürzten Schreibweise, in das Fahrzeugnavigationsgerät |
| 32 | Übermitteln der eingegebenen Zielführungselementdaten an eine Zentrale, über eine Online-Verbindung zwischen dem Fahrzeugnavigationsgerät und der Zentrale |
| 33 | Vergleichen der übermittelten Zielführungselementdaten mit in der Zentrale verfügbaren Zielführungselement-Datenbankeinträgen (bei diesem Beipiel mit dem Ergebnis, dass den übermittelten Zielführungselementdaten zumindest für einige Zielführungselemente eine Mehrzahl von Zielführungselement-Datenbankeinträgen nicht eindeutig zugeordnet werden kann) und Übermittlung der wahrscheinlichsten nicht eindeutig zuordbaren Zielführungselement-Datenbankeinträge an das Fahrzeugnavigationsgerät über eine Online-Verbindung |
| 34 | Auswahl der gewünschten Zielführungselement-Datenbankeinträge aus der Mehrzahl der an das Fahrzeugnavigationsgerät übermittelten nicht eindeutig zuordbaren Zielführungselement-Datenbankeinträge durch den Benutzer und Übermittlung der von dem Benutzer ausgewählten Ziel- führungselement-Datenbankeintrage von dem Fahrzeugnavigationsgerät an die Zentrale, über eine Online-Verbindung |
| 35 | Alle Zielführungselemente übermittelt? |
| 36 | Soll eine Online-Verbindung zu einem Operator aufgebaut werden? |
| 37 | Verifizierung eines problematischen Zielführungselements durch ein Gespräch zwischen Benutzer und Operator |
| 38 | Routenberechnung und Zielführung |
| 39 | Ende |

Der Ablauf des Verfahrens gemäß der dritten Ausführungsform entspricht bezüglich den Blöcken 30 bis 34 im Wesentlichen dem Ablauf des Verfahrens gemäß der zweiten Ausführungsform, wie er anhand der Blöcke 20 bis 24 beschrieben wurden. Bei der dritten Ausführungsform ist darüber hinaus vorgesehen, dass, sofern im Block 35 festgestellt wird, dass noch nicht alle Zielführungselemente übermittelt beziehungsweise verifiziert wurden, wobei zumindest einem Zielführungselement kein Zielführungselement-Datenbankeintrag zugeordnet werden konnte, der Benutzer im Block 36 entscheiden kann, ob eine Online-Verbindung zu einem Operator aufgebaut werden soll. Sofern eine derartige Online-Verbindung zu einem Operator nicht aufgebaut werden soll, wird zum Block 31 verzweigt, so dass der Benutzer die Möglichkeit hat, zumindest bezüglich dem oder den Zielführungselementen, denen keine Zielführungselement-Datenbankeinträge zugeordnet werden konnten, neue Zielführungselementdaten einzugeben. Sofern im Block 36 entschieden wird, dass eine Online-Verbindung zu einem Operator aufgebaut werden soll, wird zum Block 37 verzweigt, in dem zumindest ein problematisches Zielführungselement durch ein Gespräch zwischen dem Benutzer und dem Operator verifiziert werden kann. Der Operator gibt dabei das oder die verifizierten Zielführungselemente in geeigneter Form ein, so dass zum Block 38 verzweigt werden kann, in dem die Routenberechnung und Zielführung durchgeführt wird. Sofern im Block 35 festgestellt wurde, dass alle Zielführungselemente übermittelt beziehungsweise verifiziert sind, wird direkt zum Block 38 verzweigt. Das Verfahren gemäß der dritten Ausführungsform der vorliegenden Erfindung endet beim Block 39.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren zum Übergeben von zumindest einem Zielführungselement, insbesondere einem Straßen- und/oder Ortsnamen, von einem Fahrzeugnavigationsgerät zu einer Zentrale, mit den folgenden Schritten:
a) Eingehen von Zielführungselementdaten, die zumindest ein Zielführungselement betreffen, in das Fahrzeugnavigationsgerät,
b) Übermitteln von eingegebenen Zielführungselementdaten an eine Zentrale, über eine Online-Verbindung zwischen dem Fahrzeugnavigationsgerät und der Zentrale,
c) Vergleichen der übermittelten Zielführungselementdaten mit in der Zentrale verfügbaren Zielführungselement-Datenbankeinträgen und Unterscheiden zumindest der folgenden Fälle:
Fall 1: den übermittelten Zielführungselementdaten kann bezüglich jedem enthaltenen Zielführungselement eindeutig ein Zielführungselement-Datenbankeintrag zugeordnet werden,
Fall 2: den übermittelten Zielführungselementdaten kann zumindest bezüglich einem Zielführungselement eine Mehrzahl von Zielführungselement-Datenbankeinträgen nicht eindeutig zugeordnet werden,
Fall 3: den übermittelten Zielführungselementdaten kann zumindest bezüglich einem Zielführungselement kein Zielführungselement-Datenbankeintrag zugeordnet werden,
wobei die Zentrale im Fall 2 zumindest einige der Mehrzahl der nicht eindeutig zuordbaren Zielführungselement-Datenbankeinträge über eine Online-Verbindung an das Fahrzeugnavigationsgerät übermittel,
**dadurch gekennzeichnet, dass** dem Benutzer im Fall 2 ein weiterer Auswahlpunkt angeboten wird, der vom Benutzer ausgewählt werden kann, wenn keiner der Mehrzahl der übermittelten nicht eindeutig zuordbaren Zielführungselement-Datenbankeinträge zutrifft.

2. Verfahren nach Anspruch 1, **dadurch gekennzeichnet, dass** die im Fall 2 an das Fahrzeugnavigationsgerät übermittelte Mehrzahl der nicht eindeutig zuordbaren Zielführungselement-Datenbankeintrage einem Benutzer durch das Fahrzeugnavigationsgerät zur Auswahl angeboten wird, und dass ein von dem Benutzer ausgewählter Zielführungselement-Datenbankeintrag von dem Fahrzeugnavigationsgerät über eine Online-Verbindung an die Zentrale übermittelt wird.

3. Verfahren nach einem der vorhergehenden Ansprüche, **dadurch gekennzeichnet, dass** die vom Benutzer vorgenommene Auswahl des weiteren Auswahlpunktes der Zentrale über eine Online-Verbindung mitgeteilt wird, und dass die Zentrale anschließend entsprechend dem Fall 3 verfährt.

4. Verfahren nach einem der vorhergehenden Ansprüche, **dadurch** gekenntzeichnet, dass im Fall 1 jeder eindeutig zuordbare Zielführungselement-Datenbankeintrag von der Zentrale zur weiteren Verarbeitung übernommen wird.

5. Verfahren nach einem der vorhergehenden Ansprüche, **dadurch gekennzeichnet, dass** die Zentrale im Fall 3 über eine Online-Verbindung eine Nachricht an das Fahrzeugnavigationsgerät übermittelt, die dem Benutzer signalisiert, dass zumindest einem Zielführungselement kein Zielführungselement-Datenbankeintrag zugeordnet werden kann.

6. Verfahren nach einem der vorhergehenden Ansprüche, **dadurch gekennzeichnet, dass** dem Benutzer im Fall 3 angeboten wird, das eine Online-Verbindung zu einem Operator hergestellt wird.

7. Verfahren nach einem der vorhergehenden Ansprüche, **dadurch gekennzeichnet, dass** zumindest ein Zielführungselement einen Ortsnamen umfasst.

8. Verfahren nach einem der vorhergehenden Ansprüche, **dadurch gekennzeichnet, dass** zumindest ein Zielführungselement einen Straßenamen umfasst.

9. Verfahren nach einem der vorhergehenden Ansprüche, **dadurch gekennzeichnet, dass** die eingegebenen. Zielführungsdaten mehrere Zielführungselemente eines Routenstartpunktes und/oder eines Routenzielpunktes betreffen.

10. Verfahren nach einem der vorhergehenden Ansprüche, **dadurch gekennzeichnet, dass** es mehrmals hintereinander für unterschiedliche Zielführungselemente durchgeführt wird.

11. Verfahren nach einem der vorhergehenden Ansprüche, **dadurch gekennzeichnet, dass** es zur Übergabe von einem oder mehreren der folgenden Zielführungselemente verwendet wird: Startort, Startstraße, Abschnitt der Startstraße, Zielort, Zielstraße, Abschnitt der Zielstraße.

12. Verfahren nach einem der vorhergehenden Ansprüche, **dadurch gekennzeichnet, dass** der Datenaustausch zwischen dem Fahrzeugnavigationsgerät und der Zentrale über ein Mobilfunknetz erfolgt.

13. Fahrzeugnavigationsgerät, das zur Teilnahme an dem Verfahren nach einem der vorhergehenden Ansprüche ausgelegt ist.

14. Zentrale, insbesondere Kommunikationsserver, die zur Teilnahme an dem Verfahren nach einem der vorhergehenden Ansprüche ausgelegt ist.

15. Fahrzeugnavigationsgerät, insbesondere zur Durchführung des Verfahrens nach einem der Ansprüche 1 bis 13, das keine für eine Routenberechnung ausreichende Datenbasis aufweist, mit einer Eingabeeinrichtung, über die ein Benutzer zumindest ein Zielführungselement betreffende Zielfürungselementdaten eingeben kann, wobei das Fahrzeugnavigationsgerät Kommunikationseinrichtungenaufweist oder mit separaten Kommunikationseinrichtungen zusammenwirkt, um Daten mit einer Zentrale auszutauschen, in der Routen berechnet werden, und wobei es Auswahlmittel aufweist, mit denen der Benutzer zumindest einen Zielführungselement-Datenbankeintrag einer Mehrzahl von Zielführungselement-Datenbankeinträgen auswählen kann, die von der Zentrale als Antwort auf an die Zentrale übermittelte Zielfürungselementdaten übermittelt wird, wenn die Zentrale zumindest einem Zielführungselement eine Mehrzahl von Zielführungselement-Datenbankeinträgen nicht eindeutig zuordnen kann, **dadurch gekennzeichnet, dass** mit den Auswahlmitteln ein weiterer Auswahlpunkt angeboten wird, der vom Benutzer ausgewählt werden kann, wenn keiner der Mehrzahl der übermittelten nicht eindeutig zuordbaren Zielführungselement-Datenbankeinträge zutrifft.

16. Fahrzeugnavigationsgerät nach Anspruch 15, **dadurch gekennzeichnet, dass** es den zumindest einen vom Benutzer ausgewählten Zielführungselement-Datenbankeintrag mit den Kommunikationseinrichtungen an die Zentrale übermittelte.

17. Fahrzeugnavigationsgerät nach einem der Ansprüche 15 bis 16, **dadurch gekennzeichnet, dass** zumindest ein Zielführungselement einen Ortsnamen umfasst.

18. Fahrzeugnavigationsgerät nach einem der Ansprüche 15 bis 17, **dadurch gekennzeichnet, dass** zumindest ein Zielführungselement einen Straßenamen umfasst.

19. Fahrzeugnavigationsgerät nach einem der Ansprüche 15 bis 18, **dadurch gekennzeichnet, dass** die eingegebenen Zielführungselementdaten mehrere Zielführungselemente eines Routenstartpunktes und/oder eines Routenzielpunktes betreffen.

20. Fahrzeugnavigationsgerät nach einem der Ansprüche 15 bis 19, **dadurch gekennzeichnet, dass** die Kommunikationseinrichtungen durch ein Mobilfunkendgerät gebildet sind.

21. Zentrale, insbesondere zur Durchführung des Verfahrens nach einem der Ansprüche 1 bis 13, in der Zielführungselement-Datenbankeinträge zur Verfügung stehen, wobei die Zentrale Kommunikationseinrichtungen aufweist oder mit separaten Kommunikationseinrichtungen zusammenwirkt, um Daten mit Fahrzeugnavigationsgeräten auszutauschen, und wobei sie dazu ausgelegt ist, über die Kommunikationseinrichtungen von einem Fahrzeugnavigationsgerät übermittelte Zielführungselementdaten zu empfangen, wobei sie Mittel aufweist, um empfangenen Zielführungselementdaten mit Zielführungselement-Datenbankeinträgen zu vergleichen und dabei zumindest die folgende Fälle zu unterscheiden:
Fall 1: den übermittelten Zielführungselementdaten kann bezüglich jedem enthaltenen Zielführungselement eindeutig ein Zielführungselement-Datenbankeintrag zugeordnet werden;
Fall 2: den übermittelten Zielführungselementdaten kann zumindest bezüglich einem Zielführungselement eine Mehrzahl von Zielführungselement-Datenbankeinträgen nicht eindeutig zugeordnet werden,
Fall 3: den übermittelten Zielführungselementdaten kann zumindest bezüglich einem Zielführungselement kein Zielführungselement-Datenbankeintrag zugeordnet werden,
und wobei sie im Fall 2 zumindest einige der Mehrzahl der nicht eindeutig zuordbaren Zielführungselement-Datenbankeinträge über die Kommunikationseinrichtungen an das Fahrzeugnavigationsgerät übermittelt, **dadurch gekennzeichnet, dass** sie dem Benutzer im Fall 2 einen weiteren Auswahlpunkt anbietet, der vom Benutzer ausgewählt werden kann, wenn keiner der Mehrzahl der übermittelten nicht eindeutig zuordbaren Zielführungselement-Datenbankeinträge zutrifft.

22. Zentrale nach Anspruch 21, **dadurch gekennzeichnet, dass** dazu ausgelegt ist, von einem Benutzer aus der Mehrzahl der Zielführungselement-Datenbankeinträge ausgewählte Zielführungselement-Datenbankeinträge über die Kommunikationseinrichtungen zu empfangen und diese vom Benutzer ausgewählten Zielführungselement-Datenbankeinträge weiterzuverarbeiten.

23. Zentrale nach einem der Ansprüche 21 bis 22, **dadurch gekennzeichnet, dass** sie dazu ausgelegt ist, im Fall 1 die eindeutig zuordbaren Zielführungselement-Datenbankeinträge weiterzuverarbeiten.

24. Zentrale nach einem der Ansprüche 21 bis 23, **dadurch gekennzeichnet, dass** sie dazu ausgelegt ist, im Fall 3 über die Kommunikationseinrichtungen eine Nachricht an das Fahrzeugnavigationsgerät zu übermitteln, die dem Benutzer signalisiert, dass zumindest einem Zielfühmngselement kein Zielführungselement-Datenbankeintrag zugeordnet werden kann.

25. Zentrale nach einem der Ansprüche 21 bis 24, **dadurch gekennzeichnet, dass** sie dazu ausgelegt ist, im Fall 3 über die Kommunikationseinrichtungen eine Nachricht an das Fahrzeugnavigationsgerät zu übermitteln, die dem Benutzer anbietet, das eine Online-Verbindung mit einem Operator hergestellt wird.

26. Zentrale nach einem der Ansprüche 21 bis 25, **dadurch gekennzeichnet, dass** zumindest ein Zielführungselement einen Ortsnamen umfasst.

27. Zentrale nach einem der Ansprüche 2 bis 26, **dadurch gekennzeichnet, dass** zumindest ein Zielführungselemeht einen Straßenamen umfasst.

28. Zentrale nach einem der Ansprüche 21 bis 27, **dadurch gekennzeichnet, dass** die eingegebenen Zielführungsdaten mehrere Zielführungselemente eines Routenstartpunktes und/oder eines Routenzielpunktes betreffen.

29. Zentrale nach einem der Ansprüche 21 bis 28, **dadurch gekennzeichnet, dass** die Kommunikationseinrichtungen dazu ausgelegt sind, Mobilfunkendgeräten zu kommunizieren.

## Claims

1. Method for transferring at least one routing element, in particular a street name and/or name of a locality, from a vehicle navigation device to a control centre, having the following steps:
a) routing element data which relates to at least one routing element is input into the vehicle navigation device,
b) routing element data which has been input is transferred to a control centre via an online connection between the vehicle navigation device and the control centre,
c) the transferred routing element data is compared with routing element database entries which are available in the control centre, and at least the following cases are differentiated:
case 1: a routing element database entry can be assigned unambiguously to the transferred routing element data with respect to each routing element contained:
case 2: a plurality of routing element database entries cannot be assigned unambiguously to the transferred routing element data, at least with respect to one routing element,
case 3: no routing element database entry can be assigned to the transferred routing element data at least with respect to one routing element,
wherein in case 2 at least some of the plurality of routing element database entries which cannot be assigned unambiguously are transferred to the vehicle navigation device by the control centre via an online connection,
**characterized in that** in case 2 a further selection point is offered to the user, which selection point can be selected by the user if none of the plurality of transferred routing element database entries which cannot be assigned unambiguously applies.

2. Method according to Claim 1, **characterized in that** the plurality of routing element database entries which cannot be assigned unambiguously and which are transferred to the vehicle navigation device in case 2 are offered to a user by the vehicle navigation device for selection, and **in that** a routing element database entry which is selected by the user is transferred to the control centre by the vehicle navigation device via an online connection.

3. Method according to one of the preceding claims, **characterized in that** the selection of the further selection point which is performed by the user is communicated to the control centre via an online connection, and **in that** the control centre subsequently proceeds in accordance with case 3.

4. Method according to one of the preceding claims, **characterized in that** in case 1 every routing element database entry which can be assigned unambiguously is transferred to the control centre for further processing.

5. Method according to one of the preceding claims, **characterized in that** in case 3 the control centre transfers, via an online connection, a message to the vehicle navigation device which signals to the user that a routing element database entry cannot be assigned to at least one routing element.

6. Method according to one of the preceding claims, **characterized in that** in case 3 the setting up of an online connection to an operator is offered to the user.

7. Method according to one of the preceding claims, **characterized in that** at least one routing element comprises a name of a locality.

8. Method according to one of the preceding claims, **characterized in that** at least one routing element comprises a street name.

9. Method according to one of the preceding claims, **characterized in that** the routing data which are input relate to a plurality of routing elements of a route starting point and/or of a route destination.

10. Method according to one of the preceding claims, **characterized in that** said method is carried out repeatedly in succession for different routing elements.

11. Method according to one of the preceding claims, **characterized in that** said method is used to transfer one or more of the following routing elements: starting location, starting street, section of the starting street, location of the destination, destination street, section of the destination street.

12. Method according to one of the preceding claims, **characterized in that** the exchange of data between the vehicle navigation device and the control centre takes place over a mobile radio network.

13. Vehicle navigation device which is configured to take part in the method according to one of the preceding claims.

14. Control centre, in particular communication server which is configured to take part in the method according to one of the preceding claims.

15. Vehicle navigation device, in particular for carrying out the method according to one of Claims 1 to 13, which does not have a database which is sufficient for calculating routes, having an input device by means of which a user can input routing element data which relate to at least one routing element, wherein the vehicle navigation device has communication devices or interacts with separate communication devices in order to exchange data with a control centre in which routes are calculated, and wherein said routing element has selection means by which the user can select, from a plurality of routing element database entries, at least one routing element database entry which is transferred from the control centre in response to routing element data which are transferred to the control centre if the control centre cannot unambiguously assign a plurality of routing element database entries to at least one routing element, **characterized in that** the selection means are used to offer a further selection point which can be selected by the user if none of the plurality of transferred routing element database entries which cannot be assigned unambiguously applies.

16. Vehicle navigation device according to Claim 15, **characterized in that** said vehicle navigation device uses the communication devices to transfer at least one routing element database entry, selected by the user, to the control centre.

17. Vehicle navigation device according to one of Claims 15 to 16, **characterized in that** at least one routing element comprises a name of a locality.

18. Vehicle navigation device according to one of Claims 15 to 17, **characterized in that** at least one routing element comprises a street name.

19. Vehicle navigation device according to one of Claims 15 to 18, **characterized in that** the routing element data which are input relate to a plurality of routing elements of a route starting point and/or of a route destination.

20. Vehicle navigation device according to one of Claims 15 to 19, **characterized in that** the communication devices are formed by a mobile radio terminal.

21. Control centre, in particular for carrying out the method according to one of Claims 1 to 13, in which routing element database entries are available, wherein the control centre has communication devices or interacts with separate communication devices in order to exchange data with vehicle navigation devices, and it is configured to receive routing element data transferred from a vehicle navigation device via the communication devices, wherein said control centre has means for comparing received routing element data with routing element database entries and in doing so differentiating at least the following cases:
case 1: a routing element database entry can be assigned unambiguously to the transferred routing element data with respect to every contained routing element,
case 2: a plurality of routing element database entries cannot be assigned unambiguously to the transferred routing element data at least with respect to one routing element,
case 3: a routing element database entry cannot be assigned to the transferred routing element data at least with respect to one routing element,
and wherein in case 2 said control centre transfers at least some of the plurality of routing element database entries which cannot be assigned unambiguously to the vehicle navigation device via the communication devices, **characterized in that** in case 2 said control centre offers the user a further selection point which can be selected by the user if none of the plurality of transferred routing element database entries which cannot be assigned unambiguously applies.

22. Control centre according to Claim 21, **characterized in that** said control centre is configured to receive routing element database entries selected from the plurality of routing element database entries by a user, via the communication devices, and to further process these routing element database entries which have been selected by the user.

23. Control centre according to one of Claims 21 to 22, **characterized in that** said control centre is configured to further process the routing element database entries which can be assigned unambiguously in case 1.

24. Control centre according to one of Claims 21 to 23, **characterized in that** said control centre is configured in case 3 to transfer to the vehicle navigation device, via the communication devices, a message which signals to the user that a routing element database entry cannot be assigned to at least one routing element.

25. Control centre according to one of Claims 21 to 24, **characterized in that** said control centre is configured in case 3 to transfer to the vehicle navigation device, via the communication devices, a message which offers to the user the setting up of an online connection to an operator.

26. Control centre according to one of Claims 21 to 25, **characterized in that** at least one routing element comprises a name of a locality.

27. Control centre according to one of Claims 21 to 26, **characterized in that** at least one routing element comprises a street name.

28. Control centre according to one of Claims 21 to 27, **characterized in that** a plurality of routing elements of a route starting point and/or of a route destination relate to the routing data which are input.

29. Control centre according to one of Claims 21 to 28, **characterized in that** the communication devices are configured to communicate with mobile radio terminals.

## Revendications

1. Procédé pour transmettre au moins un élément de guidage vers une destination notamment un nom de rue et/ou de lieu, à partir d'un appareil de navigation de véhicule vers une centrale, procédé comprenant les étapes suivantes :
a) entrée de données des éléments de guidage vers la destination concernant au moins un élément de guidage vers la destination dans l'appareil de navigation du véhicule,
b) transmission des données introduites, des éléments de guidage vers la destination, vers une centrale par une liaison en ligne entre l'appareil de navigation du véhicule et la centrale,
c) comparaison des données des éléments de guidage vers la destination, transmises aux entrées de la banque de données pour l'élément de guidage vers la destination disponible dans la centrale et en distinguant au moins les cas suivants :
1^{er} cas : une entrée de banque de données des éléments de guidage vers la destination peut être associée de manière univoque aux données transmises, des éléments de guidage vers la destination, pour chaque élément de guidage de destination, prévu,
2^{ème} cas : aux données transmises, des éléments de guidage vers la destination, on peut associer au moins pour un élément de guidage vers la destination, un ensemble d'entrées de la banque de données des éléments de guidage vers la destination suivant une association non univoque.
3^{ème} cas : aucune entrée de banque de données des éléments de guidage vers la destination ne peut être associée aux données transmises des éléments de guidage vers la destination, au moins pour un élément de guidage vers la destination, dans le cas 2, la centrale transmet au moins certaines des entrées de banque de données des éléments de guidage de destination qui ne peuvent être associées de manière univoque par une liaison en ligne vers l'appareil de navigation du véhicule,
**caractérisé en ce qu'**
un autre point de sélection est proposé à l'utilisateur dans le deuxième cas, ce point pouvant être sélectionné par l'utilisateur si aucune parmi l'ensemble des entrées de banque de données des éléments de guidage de destination, transmises ne peut être associé de manière univoque.

2. Procédé selon la revendication 1,
**caractérisé en ce que**
l'ensemble des entrées de banque de données des éléments de guidage de destination qui ne peuvent être associées de manière univoque et sont transmises à l'appareil de navigation du véhicule, sont offertes à un utilisateur pour la sélection par l'appareil de navigation du véhicule, et
une entrée de banque de données d'éléments de guidage de destination sélectionnée par l'utilisateur est transmise par l'appareil de navigation du véhicule à la centrale, par une liaison en ligne.

3. Procédé selon les revendications précédentes,
**caractérisé en ce que**
la sélection de l'autre point de sélection faite par l'utilisateur est communiquée à la centrale par une liaison en ligne et ensuite la centrale procède conformément au 3^{ème} cas.

4. Procédé selon les revendications précédentes,
**caractérisé en ce que**
dans le 1^{er} cas, chaque entrée de banque de données des éléments de guidage de destination, susceptible d'être associée de manière univoque est reprise par la centrale pour la suite du traitement.

5. Procédé selon les revendications précédentes,
**caractérisé en ce que**
dans le 3^{ème} cas, la centrale transmet une information par une liaison en ligne vers l'appareil de navigation du véhicule, signalant à l'utilisateur qu'au moins à un élément de guidage de destination, on ne peut associer aucune entrée de banque de données des éléments de guidage de destination.

6. Procédé selon les revendications précédentes,
**caractérisé en ce que**
dans le 3^{ème} cas, il est proposé à l'utilisateur une liaison en ligne vers un opérateur.

7. Procédé selon les revendications précédentes,
**caractérisé en ce qu'**
au moins un élément de guidage de destination comprend un nom de lieu.

8. Procédé selon les revendications précédentes,
**caractérisé en ce qu'**
au moins un élément de guidage de destination comprend un nom de rue.

9. Procédé selon les revendications précédentes,
**caractérisé en ce que**
les données de guidage de destination, introduites concernent plusieurs éléments de guidage de destination d'un point de départ de route et/ou d'un point de destination de route.

10. Procédé selon les revendications précédentes,
**caractérisé en ce qu'**
il est exécuté plusieurs fois successivement pour des éléments différents de guidage de destination.

11. Procédé selon les revendications précédentes,
**caractérisé en ce qu'**
il est utilisé pour transmettre un ou plusieurs des éléments de guidage de destination suivants : emplacement de départ, rue de départ, segment de la rue de départ, lieu de destination, rue de destination, segment de la rue de destination.

12. Procédé selon les revendications précédentes,
**caractérisé en ce que**
l'échange des données se fait entre l'appareil de navigation du véhicule et la centrale par un réseau de téléphones mobiles.

13. Appareil de navigation de véhicule conçu pour participer au procédé selon les revendications précédentes.

14. Centrale notamment serveur de communication conçu pour participer au procédé selon les revendications précédentes.

15. Appareil de navigation de véhicule notamment pour la mise en oeuvre du procédé selon les revendications 1 à 13, qui ne comporte pas de base de données suffisante pour un calcul de trajet, comportant une installation d'entrée par laquelle un utilisateur peut introduire des données des éléments de guidage de destination concernant un élément de guidage de destination,
l'appareil de navigation du véhicule comportant des installations de communication ou coopérant avec des installations de communication, séparées, pour échanger des données avec une centrale dans laquelle se calculent les trajets, et
il comporte des moyens de sélection à l'aide desquels l'utilisateur peut sélectionner au moins une entrée de banque de données des éléments de guidage de destination parmi un ensemble d'entrées de banque de données des éléments de guidage de destination, cette entrée étant transmise par la centrale comme réponse aux données des éléments de guidage de destination transmises à la centrale si la centrale ne peut associer de manière univoque un ensemble d'entrées de banque de données des éléments de guidage de destination à au moins un élément de guidage de destination,
**caractérisé en ce qu'**
un autre point de sélection est proposé par les moyens de sélection, ce point pouvant être choisi par l'utilisateur si aucune des entrées de banque de données des éléments de guidage de destination parmi l'ensemble de ces entrées transmises ne peut être associée de manière univoque.

16. Appareil de navigation de véhicule selon la revendication 15,
**caractérisé en ce qu'**
il transmet au moins une entrée de banque de données des éléments de guidage de destination sélectionnée par l'utilisateur à la centrale par les installations de communication.

17. Appareil de navigation de véhicule selon les revendications 15 à 16,
**caractérisé en ce qu'**
au moins un élément de guidage de destination comprend un nom de lieu.

18. Appareil de navigation de véhicule selon les revendications 15 à 17,
**caractérisé en ce qu'**
au moins un élément de guidage de destination comprend un nom de rue.

19. Appareil de navigation de véhicule selon les revendications 15 à 17,
**caractérisé en ce qu'**
les données des éléments de guidage de destination, entrées concernent plusieurs éléments de guidage de destination d'un point de départ de trajet et/ou d'un point de destination de trajet.

20. Appareil de navigation de véhicule selon les revendications 15 à 19,
**caractérisé en ce que**
les installations de communication sont constituées par un terminal de mobile.

21. Centrale notamment pour la mise en oeuvre du procédé selon les revendications 1 à 13, contenant des entrées de banque de données des éléments de guidage de destination,
la centrale comportant des installations de communication ou coopérant avec des installations de communication distinctes pour échanger des données avec les appareils de navigation du véhicule et la centrale est conçue pour recevoir par les installations de communication, des données des éléments de guidage de destination transmises par un appareil de navigation de véhicule, la centrale comprenant des moyens pour comparer les données des éléments de guidage de destination reçues, à des entrées de banque de données des éléments de guidage de destination et de distinguer au moins les cas suivants :
1^{er} cas : aux données d'éléments de guidage de destination, transmises on peut associer de façon univoque, une entrée de banque de données des éléments de guidage de destination à chaque élément de guidage de destination,
2^{ème} cas : aux données d'éléments de guidage de destination, transmises, on peut associer au moins pour un élément de guidage de destination, un ensemble d'entrées de banque de données des éléments de guidage de destination suivant une association non univoque,
3^{ème} cas : aux données des éléments de guidage de destination, transmises, à au moins un élément de guidage de destination on ne peut associer aucune entrée de banque de données des éléments de guidage de destination, et
dans le 2^{ème} cas, la centrale transmet au moins quelques-unes, parmi l'ensemble des entrées de banque, des données d'éléments de guidage de destination qui ne peuvent être associées de manière univoque par les installations de communication à l'appareil de navigation du véhicule,
**caractérisée en ce que**
dans le 2^{ème} cas, elle propose à l'utilisateur un autre point de sélection qui peut être sélectionné par l'utilisateur si aucune des entrées de banque de données des éléments de guidage de destination, parmi l'ensemble des entrées transmises, ne peut être associée de manière univoque.

22. Centrale selon la revendication 21,
**caractérisée en ce qu'**
elle est conçue pour recevoir d'un utilisateur parmi l'ensemble des entrées de banque de données des éléments de guidage de destination, des entrées sélectionnées de banque de données des éléments de guidage de destination, par l'intermédiaire des installations de communication et elle continue le traitement de ces entrées de banque de données des éléments de guidage de circulation sélectionnées par l'utilisateur.

23. Centrale selon les revendications 21 à 22,
**caractérisée en ce qu'**
elle est conçue pour que dans le 1^{er} cas, elle poursuive le traitement des entrées de banque de données des éléments de guidage de destination qui lui sont associées de manière univoque.

24. Centrale selon les revendications 21 à 23,
**caractérisée en ce qu'**
elle est conçue pour que dans le 3^{ème} cas, elle transmette par les installations de communication, un message vers l'appareil de navigation du véhicule qui signale à l'utilisateur qu'à au moins un élément de guidage de destination, on ne peut associer aucune entrée de banque de données des éléments de guidage de destination.

25. Centrale selon les revendications 21 à 24,
**caractérisée en ce qu'**
elle est conçue pour que dans le 3^{ème} cas, elle transmette par les installations de communication, un message vers l'appareil de navigation du véhicule qui propose à l'utilisateur d'établir une liaison en ligne avec un opérateur.

26. Centrale selon les revendications 21 à 25,
**caractérisée en ce qu'**
au moins un élément de guidage de destination comprend un nom de lieu.

27. Centrale selon les revendications 21 à 26,
**caractérisée en ce qu'**
au moins un élément de guidage de destination comprend un nom de rue.

28. Centrale selon les revendications 21 à 27,
**caractérisée en ce que**
les données de guidage de destination, introduites concernent plusieurs éléments de guidage de destination d'un point de départ routier et/ou d'un point routier de destination.

29. Centrale selon les revendications 21 à 28,
**caractérisée en ce que**
les installations de communication sont conçues pour communiquer par les terminaux de mobiles.
